(19) Europäisches Patentamt
European Patent Office
Office européen des brevets

(11) Publication number: 0 146 747
B1

(12) # EUROPEAN PATENT SPECIFICATION

(45) Date of publication of patent specification: 29.04.87

(51) Int. Cl.[4]: C 09 D 11/00

(21) Application number: 84113422.4

(22) Date of filing: 07.11.84

(54) **Aqueous ink compositions.**

(30) Priority: 25.11.83 JP 222817/83
14.06.84 JP 123282/84

(43) Date of publication of application:
03.07.85 Bulletin 85/27

(45) Publication of the grant of the patent:
29.04.87 Bulletin 87/18

(84) Designated Contracting States:
CH DE FR GB LI

(56) References cited:
PATENTS ABSTRACTS OF JAPAN, vol. 5, no. 120 (C-65)792r, 4th August 1981

(73) Proprietor: ORIENT CHEMICAL INDUSTRIES, LTD.
7-14, 1-chome, Shinmori Asahi-ku
Osaka-shi (JP)

(72) Inventor: Senshu, Hisashi
No. 305, Naritagreenhaitsu, 1-32
Naritanishimachi Neyagawa-shi Osaka-fu (JP)
Inventor: Matsubara, Sadahiko Orient Chem. Ind. Ltd.
Neyagawaryo, 8-1 Sanrahigashimachi
Neyagawa-shi Osaka-fu (JP)

(74) Representative: Patentanwälte Liedl, Nöth
Steinsdorfstrasse 21-22
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 146 747 B1

Courier Press, Leamington Spa, England.

**Description**

The present invention relates to aqueous ink compositions having good stability and high safety for writing, printing and recording.

As is well known, aqueous ink compositions for writing implements, etc. are usually solutions of water-soluble dyes in water and glycol solvents. Efforts have been made to fulfill the two conflicting requirements of good stability of the ink in the form of a solution and high water resistance of the ink after writing, with use of suitable additives. While improvements have been made in recent years in paper processing techniques to give increased water resistance to writing, the jet ink printing process, etc. require aqueous inks adapted to have enhanced stability with use of improved dyes which are less susceptible to association.

Water-soluble dyes, especially black dyes, heretofore used for aqueous inks for writing implements and the like are polyazo dyes containing 1-amino-8-naphthol-3,6-disulfonic acid (H acid) as a coupled component. However, the acid coupling of dye components with H acid is lower in reactivity than with other compounds, so that the dye obtained varies greatly in quality from lot to lot. Furthermore, such amino-containing water-soluble polyazo dyes, which are prone to association, have a serious drawback. When formulated into an aqueous ink, the dye initially exhibits good solubility and stability but becomes less stable with time, such that the dye undergoes association in one to two months, resulting in gelation, a rise of viscosity and subsequent precipitation to impair the properties of the ink.

Accordingly the above-mentioned conventional water-soluble dyes are almost unusable for jet printing inks which have been introduced into wide use recently and which must retain high stability even when the pH varies slightly.

To overcome the above problems, we have conducted extensive research and found that an aqeuous ink composition having high solution stability can be obtained with use of a tetrakisazo dye represented by the formula

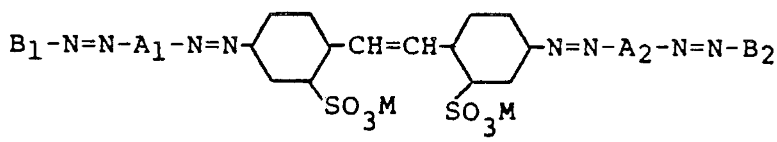

(I)

wherein $A_1$ and $A_2$ represent

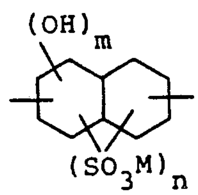

(wherein m is 0 or 1, n is 0, 1 or 2, and M is H, Na, K, Li or $NH_4$) and are the same or different, and $B_1$ and $B_2$ represent

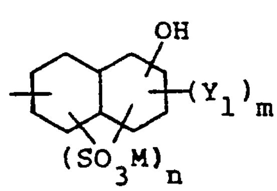

or

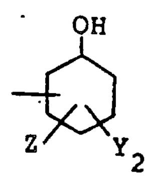

(wherein $Y_1$ is COOM, $Y_2$ is H, Cl, $CH_3$, OH, $OCH_3$, COOM or $SO_3M$, and Z is H, $CH_3$, t-$C_4H_9$ or COOM) and are the same or different. We have further found that the tetrakisazo dye is negative when tested for mutagenicity by Ames Test and can be formulated into aqueous ink compositions having high safety in addition to high solution stability. Thus, the present invention has been accomplished.

The tetrakisazo dye of the present invention represented by the formula (I) is prepared by tetrazotizing 1 mole of 4,4'-diaminostilbene-2,2'-disulfonic acid by a conventional process, coupling the resulting product with 2 moles of a compound represented by the formula

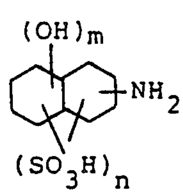

(II)

wherein m is 0 or 1, and n is 0, 1 or 2, or with 2 moles of a mixture of compounds of the formula (II), tetrazotizing the resulting disazo dye again, and coupling the resulting compound with 2 moles of at least one compound represented by the formula

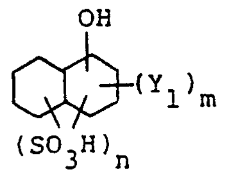

(III)

wherein $Y_1$ is COOH, m is 0 or 1, and n is 0, 1 or 2, or of at least one compound represented by the formula

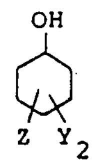

(IV)

wherein $Y_2$ is H, Cl, $CH_3$, OH, $OCH_3$, COOH or $SO_3H$, and Z is H, $CH_3$, t-$C_4H_9$ or COOH, or with 2 moles of a mixture of compounds of the formulae (III) and (IV). The dye obtained is purified with an acid or by salting-out or desalting treatment in usual manner and made into an alkali salt with a suitable amount of alkali, giving a water-soluble dye having good solubility and high safety and retaining good stability for a prolonged period of time. The dye can be modified in color with a known water-soluble dye to obtain the desired color. Examples of useful alkalis are sodium hydroxide, potassium hydroxide, lithium hydroxide, ammonia water, etc.

Examples of compounds represented by the formula (II) are 1 - aminonaphthalene, 1 - amino - 4 - naphthalenesulfonic acid, 1 - amino - 5 - naphthalenesulfonic acid, 1 - amino - 6 - naphthalenesulfonic acid, 1 - amino - 7 - naphthalenesulfonic acid, 1 - amino - 8 - naphthalenesulfonic acid, 2 - amino - 1 - naphthalenesulfonic acid, 5 - amino - 1 - naphthol, 1 - amino - 5 - naphthol - 7 - sulfonic acid, 1 - amino - 8 - naphthol - 4 - sulfonic acid, 2 - amino - 5 - naphthol - 7 - sulfonic acid, 2 - amino - 8 - naphthol - 6 - sulfonic acid, 1 - amino - 8 - naphthol - 2,4 - disulfonic acid, 1 - amino - 8 - naphthol - 3,6 - disulfonic acid, 1 - amino - 8 - naphthol - 4,6 - disulfonic acid, etc.

Examples of compounds represented by the formula (III) are 1 - naphthol, 1 - naphthol - 4 - sulfonic acid, 1 - naphthol - 5 - sulfonic acid, 1 - naphthol - 8 - sulfonic acid, 2 - naphthol, 2 - naphthol - 6 - sulfonic acid, 2 - naphthol - 3,6 - disulfonic acid, 2 - naphthol - 3 - carboxylic acid, etc.

Examples of compounds represented by the formula (IV) are phenol 4-chlorophenol, resorcinol, phenol-4-sulfonic acid, o-cresol, salicylic acid, sulfosalicylic acid, 2-t-butyl-4-hydroxyanisole, etc.

Given below are examples of tetrakisazo dyes of the invention represented by the formula (I) and obtained by the above process.

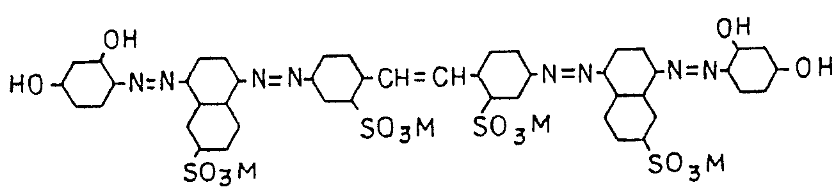

(1)

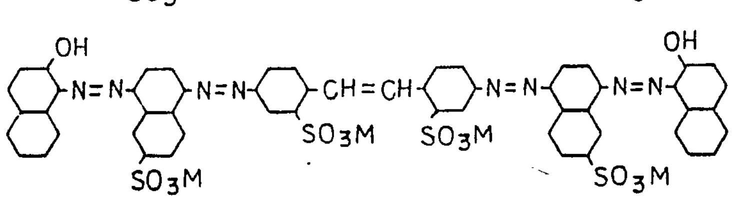

(2)

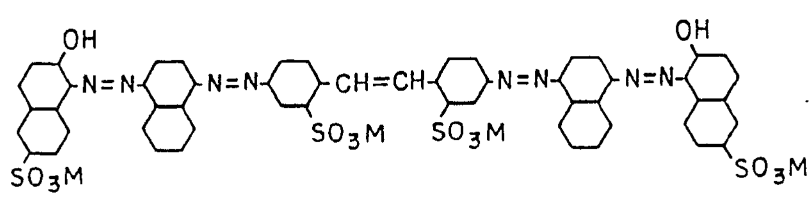

(3)

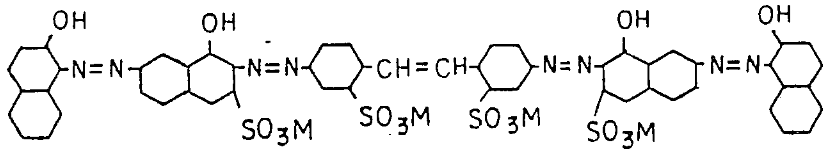
(4)

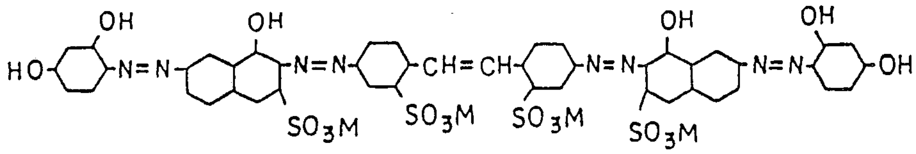
(5)

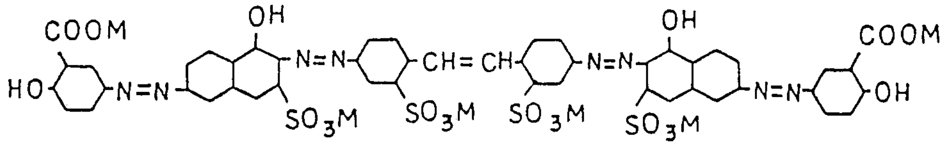
(6)

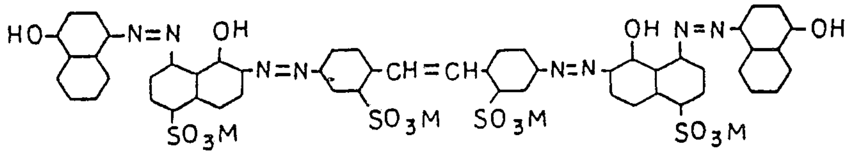
(7)

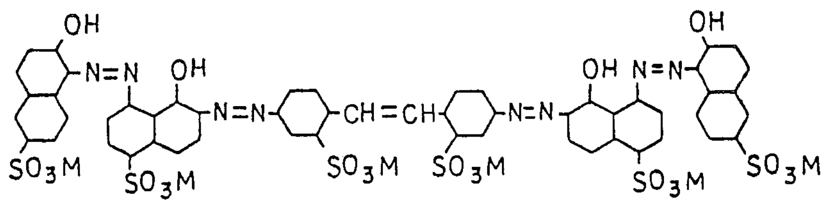
(8)

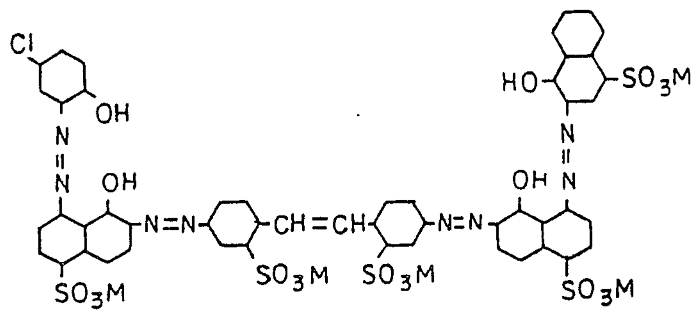
(9)

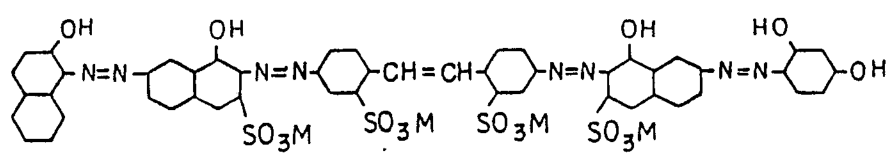
(10)

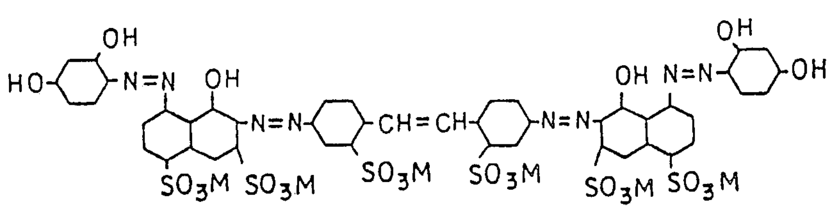
(11)

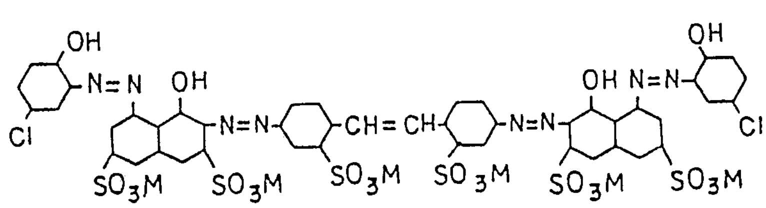
(12)

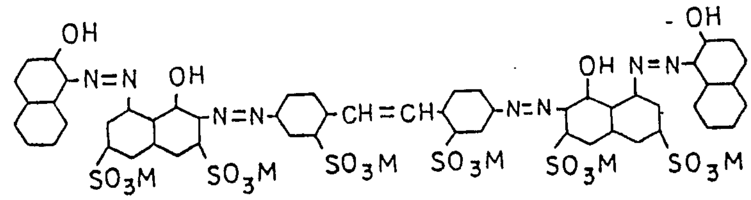

(13)

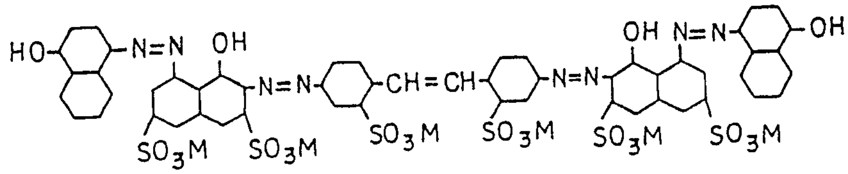

(14)

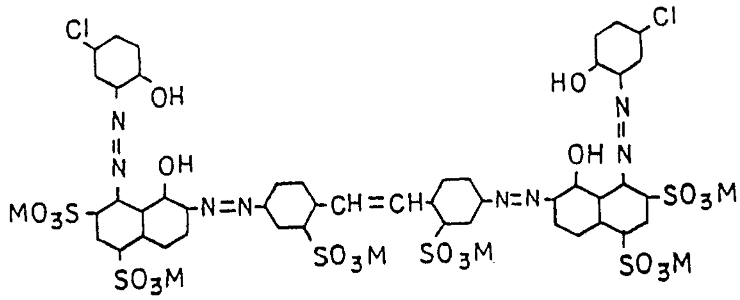

(15)

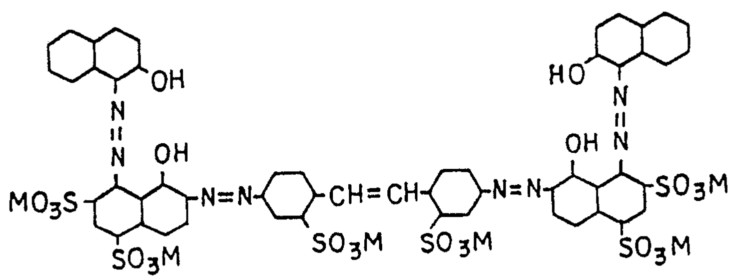

(16)

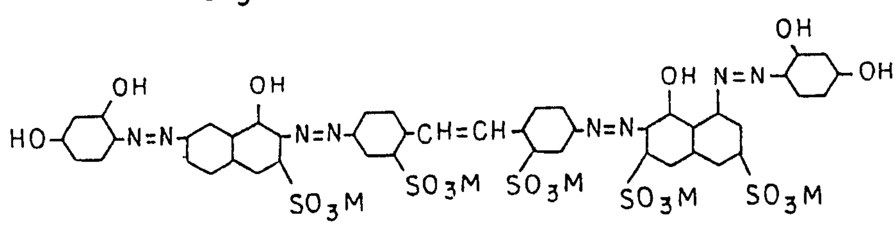

(17)

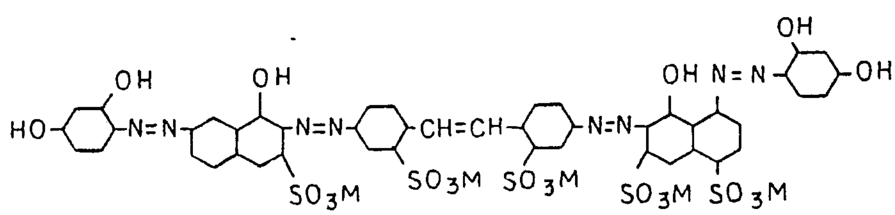

(18)

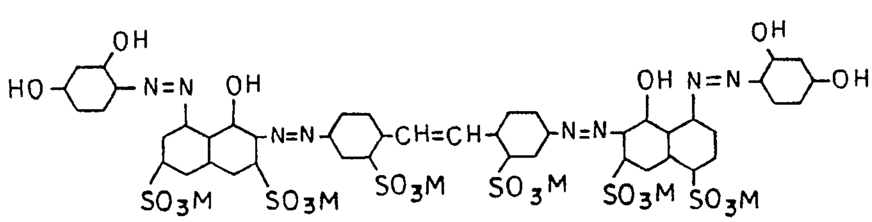

(19)

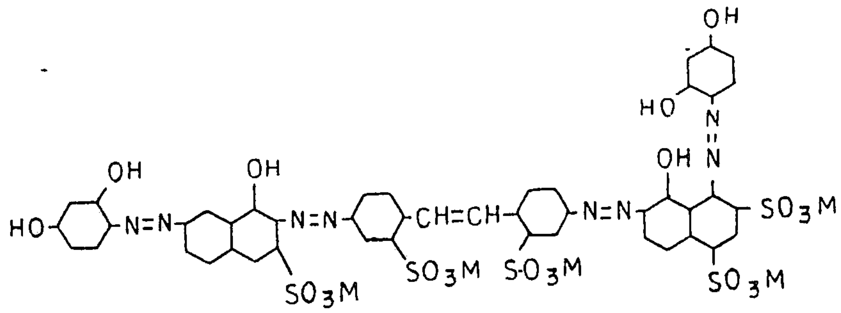

(20)

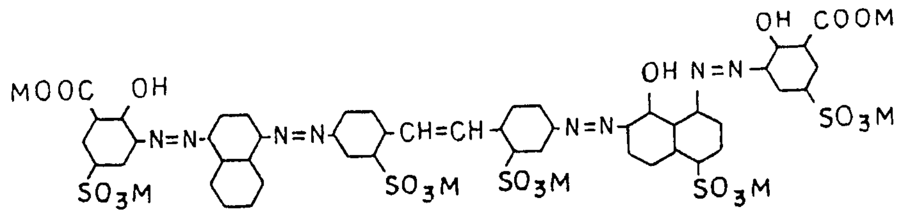

(21)

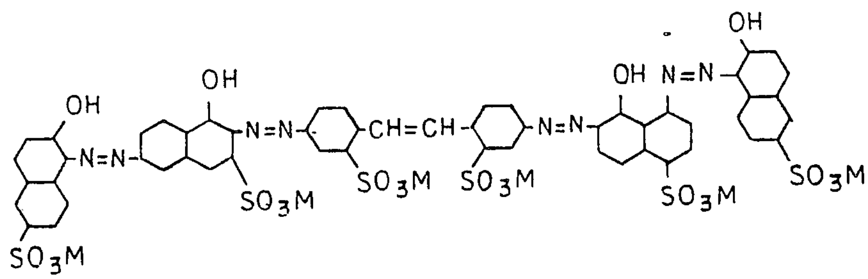

(22)

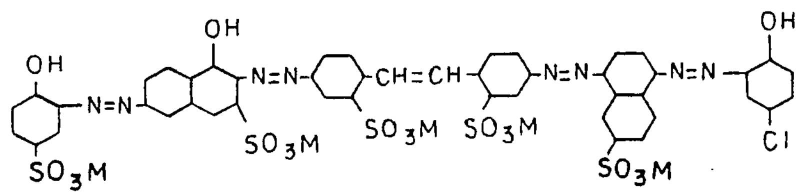

(23)

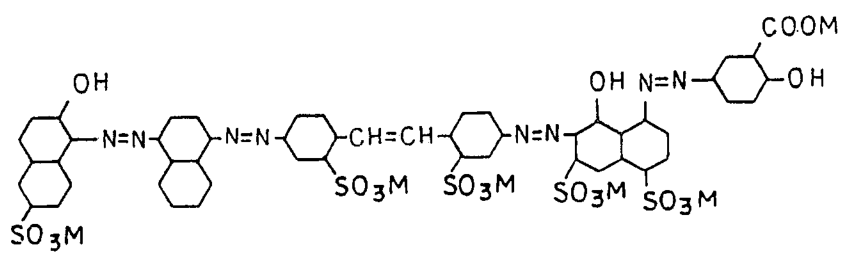

(24)

The solvents which are desirable for preparing ink compositions of this invention are water, and solvents which are miscible with water to thoroughly dissolve the foregoing dyes, activators and other additives, have suitable hygroscopicity and are capable of suitably controlling evaporation of the composition. Examples of such solvents are ethylene glycol, diethylene glycol, thiodiglycol and other glycol solvents, alcohol solvents, cellosolve solvents, carbitol solvents and pyrrolidone solvents. Examples of useful additives are alkanolamines, and anionic, nonionic or amphoteric activators. Depending on the use contemplated, disinfectants, corrosion inhibitors, sequestering agents, etc. are also usable. When required, natural or synthetic water-soluble resins are also usable in admixture with the dye of the formula (I).

The proportion of the coloring agent to be incorporated into the present ink composition comprising such ingredients, which is variable with the contemplated use, is suitably 1 to 20%.

The aqueous ink composition thus prepared according to the invention is comparable to those comprising conventional polyazo dyes in color density, has good stability for a prolonged period of time, is free of the rise of viscosity and is most suited for writing implements, jet printing, recorders, etc.

Examples of the present invention are given below wherein "dye No." refers to the tetrakisazo dye of the same dye number according to the invention already mentioned. In the examples, the parts are all by weight.

Example 1

| | |
|---|---|
| Dye No. 4 (M = Na) | 10 parts |
| Ethylene glycol | 10 parts |
| Diethylene glycol | 10 parts |
| Propylene glycol | 5 parts |
| Disinfectant | 0.3 part |
| Activator | 0.2 part |
| Distilled water | 64.5 parts |

The mixture of above ingredients was heated at 60 to 70°C to prepared a solution, which was then filtered with industrial filter paper to obtain a black ink composition.

The ink composition was placed into a marking pen container and tested for writing. The ink flowed out from the pen tip always smoothly without any interruption to produce written images in a distinct color. The composition was allowed to stand at room temperature for more than 6 months and then checked. The composition was found to be stable and was filterable satisfactorily when tested with a 1-micron membrane filter.

Example 2

An ink composition was prepared in the same manner as in Example 1 except that 10 parts of dye No. 17 (M = Li) was used in place of the dye used in Example 1.

Example 3

| | |
|---|---|
| Dye No. 8 (M = $NH_4$) | 10 parts |
| Ethylene glycol | 10 parts |
| Diethylene glycol | 10 parts |
| Thiodiglycol | 5 parts |
| Triethanolamine | 2 parts |
| Disinfectant | 0.3 part |
| Activator | 0.2 part |
| Distilled water | 62.5 parts |

The above ingredients were made into an ink composition in the same manner as in Example 1.

Example 4

An ink composition was prepared in the same manner as in Example 3 except that 10 parts of dye No. 11 (M = Na) was used in place of the dye used in Example 3.

Example 5

An ink composition was prepared in the same manner as in Example 3 except that 10 parts of dye No. 19 (M = Na) was used in place of the dye used in Example 3.

Comparative Example 1

An ink composition was prepared in the same manner as in Example 1 or 2 except that 10 parts of C.I. Direct Black 19, purified by desalting, was used in place of the dye used in Example 1 or 2.

Comparative Example 2

An ink composition was prepared in the same manner as in Example 3, 4 or 5 except that 10 parts of C.I. Direct Black 154, purified by desalting, was used in place of the dye used in Example 3, 4 or 5.

Comparative Example 3

A black ink having high safety was prepared in the same manner as in Example 1 or 2 except that the dye used in Example 1 or 2 was replaced by the following dyes.

| | |
|---|---|
| C.I. Food Yellow 3 | 5.5 parts |
| C.I. Food Violet 2 | 1.5 parts |
| C.I. Food Blue 2 | 3 parts |

When triethanolamine was added to the ink, a color change occurred.

Table 1 shows the properties of the writing inks prepared in the foregoing Examples and Comparative Examples. The stability, viscosity change and filterability (with use of 1-micron membrane filter) listed were determined after allowing the inks to stand at room temperature for 6 months.

TABLE 1

| | Example | | Comparative Example | | |
|---|---|---|---|---|---|
| | 1, 2 | 3, 4, 5 | 1 | 2 | 3 |
| Color | Reddish black | Bluish black | Reddish black | Yellowish black | Bluish black |
| Solubility | A | A | B | B | A |
| Stability | A | A | D | D | A |
| Viscosity change | A | A | D | D | A |
| filterability | A | A | D | D | A |
| Water resistance | C | C | A | B | D |
| Fastness to light | B | B | A | A | D |

Note: A: Very good
B: Good
C: Slightly poor
D: Very poor

Example 6

| | |
|---|---|
| Dye No. 5 (M = Na) | 5 parts |
| Diethylene glycol | 11 parts |
| Triethanolamine | 2 parts |
| Disinfectant | 0.2 part |
| Distilled water | 81.8 parts |

The above ingredients were thoroughly mixed together at 30 to 40°C to obtain a solution, which was then purified by filtration with a membrane filter 0.8 micron in pore size, affording a bluish black jet printing ink. The ink obtained had high stability as a solution, caused no clogging and produced prints in a distinct color by jet printing.

The prints produced with use of the ink on water-resistant paper (e.g. IJ—MATCOAT M8 (brand name) and IJ—M—BW (brand name) manufactured by Mitsubishi Paper Mills, Ltd.) had good resistance to water.

Example 7

A bluish black ink composition was prepared in the same manner as in Example 6 except that 5 parts of dye No. 18 (M = Na) was used in place of the dye used in Example 6. The composition obtained was

comparable to the one obtained in Example 6 in properties.

Example 8

| | |
|---|---|
| Dye No. 10 (M = Na) | 5 parts |
| Triethylene glycol | 10 parts |
| Thiodiglycol | 2 parts |
| N-Methylpyrrolidone | 1 part |
| Disinfectant | 0.2 part |
| Distilled water | 81.8 parts |

The above ingredients were treated in the same manner as in Example 6 to obtain a reddish black jet printing ink. The ink had high stability as a solution, caused no clogging and produced prints of good water resistance with use of coated paper.

Example 9

A reddish black ink composition was prepared in the same manner as in Example 8 except that 5 parts of dye No. 20 (M = Na) was used in place of the dye used in Example 8. The composition was comparable to the one obtained in Example 8 in properties.

Example 10

| | |
|---|---|
| Dye No. 14 (M = Na) | 5 parts |
| N-Methylpyrrolidone | 11 parts |
| Diethylene glycol | 2 parts |
| Triethanolamine | 1 part |
| Disinfectant | 0.2 part |
| Distilled water | 80.8 parts |

The above ingredients were treated in the same manner as in Example 6 to obtain a reddish black jet printing ink. The ink had high stability as a solution, caused no clogging and produced prints of good water resistance with use of coated paper.

Comparative Example 4

A reddish black ink was prepared in the same manner as in Example 6 or 7 except that 5 parts of C.I. Direct Black 19, purified by desalting, was used in place of the dye used in Example 6 or 7. Although the ink produced prints of good water resistance on usual record paper, the ink caused clogging during a long period of use.

Comparative Example 5

A yellowish black ink was prepared in the same manner as in Example 8 or 9 except that 5 parts of C.I. Direct Black 154, purified by desalting, was used in place of the dye used in Example 8 or 9. The ink caused clogging during use for a long period of time although giving prints of good water resistance on usual record paper.

Examples 11—24

Ink compositions were prepared in the same manner as in Example 6 with the exception of using 5 parts of the dyes of the invention listed in Table 2 below, in place of dye No. 5. Table 2 also shows the stability of the inks and the colors of prints produced with use of the inks on coated paper by jet printing. The inks were tested for stability by filtration with a 0.8-micron membrane filter after allowing the ink to stand at room temperature for 6 months.

TABLE 2

| Example | Dye No. | M | Stability | Colour |
|---|---|---|---|---|
| 11 | 1 | Na | Good | Dark blue |
| 12 | 2 | Na | „ | Light blue |
| 13 | 3 | Na | „ | Dark blue |
| 14 | 6 | $NH_4$ | „ | Medium blue |
| 15 | 7 | Li | „ | Reddish black |
| 16 | 9 | Na | „ | Reddish black |
| 17 | 12 | Na | „ | Reddish black |
| 18 | 13 | K | „ | Black |
| 19 | 15 | Na | „ | Reddish black |
| 20 | 16 | Na | „ | Bluish black |
| 21 | 21 | $NH_4$ | „ | Medium blue |
| 22 | 22 | Na | „ | Reddish black |
| 23 | 23 | Li | „ | Reddish black |
| 24 | 24 | Na | „ | Reddish black |
| Comp. Ex. | | | | |
| 4 | | | Precipitation | Reddish black |
| 5 | | | „ | Yellowish black |

**Claim**

An aqueous ink composition characterized in that the composition comprises a tetrakisazo dye represented by the formula

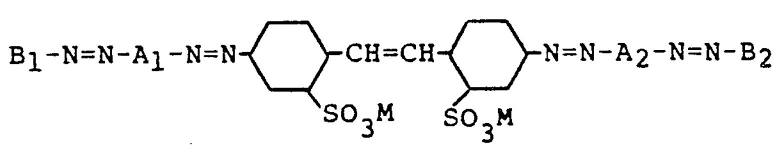

wherein $A_1$ and $A_2$ represent

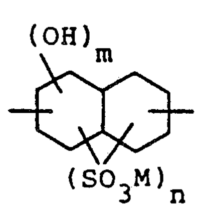

(wherein m is 0 or 1, n is 0, 1 or 2, and M is H, Na, K, Li or $NH_4$) and are the same or different, and $B_1$ and $B_2$ represent

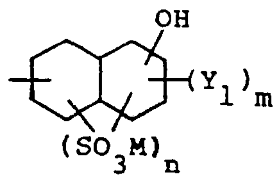

or

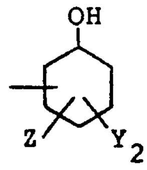

(wherein $Y_1$ is COOM, $Y_2$ is H, Cl, $CH_3$, OH, $OCH_3$, COOM or $SO_3M$, and Z is H, $CH_3$, t-$C_4H_9$ or COOM) and are the same or different.

**Patentansprüch**

Wäßrige Tintenzusammensetzung, dadurch gekennzeichnet, daß die Zusammensetzung einen Tetrakisazo-Farbstoff der chemischen Formel

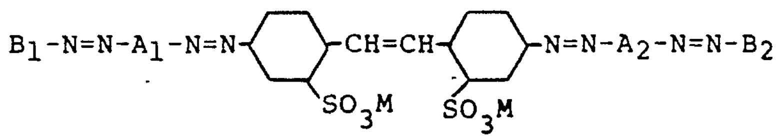

enthält, worin $A_1$ und $A_2$, die identisch oder verschieden sein können,

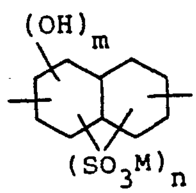

(mit m is 0 oder 1, n is 0, 1 oder 2 und M ist H, Na, K, Li oder $NH_4$) darstellen, und $B_1$ und $B_2$, die identisch oder verschieden sein können

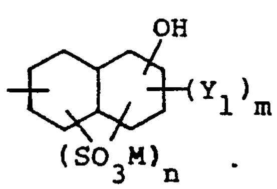

oder

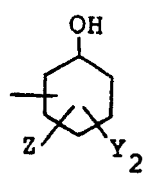

(mit $Y_1$ ist COOM, $Y_2$ ist H, Cl, $CH_3$, OH, $OCH_3$, COOM oder $SO_3M$ und Z ist, H, $CH_3$, t-$C_4H_9$ COOM) darstellen.

**Revendication**

Composition d'encre aqueuse, caractérisée en ce que la composition contient un colorant tetrakisazoïque représenté par la formule:

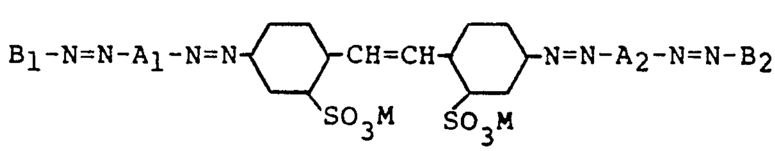

dans laquelle $A_1$ et $A_2$ représentent

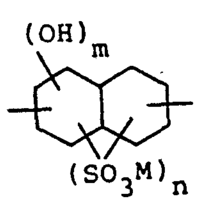

(dans laquelle m est égal à 0 ou 1, n est égal à 0, 1 ou 2, et M est H, Na, K, Li ou $NH_4$) et sont identiques ou différents, et $B_1$ et $B_2$ représentent

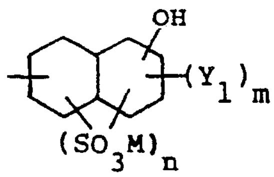 ou 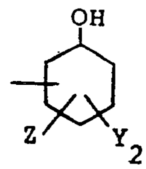

(dans lesquelles $Y_1$ est COOM, $Y_2$ est H, Cl, $CH_3$, OH, $OCH_3$, COOM ou $SO_3M$, et Z est H, $CH_3$, t-$C_4H_9$ ou COOM) et sont identiques ou différents.